# EUROPÄISCHE PATENTSCHRIFT

(11) **EP 1 945 446 B1**
(45) Veröffentlichungstag und Bekanntmachung des Hinweises auf die Patenterteilung: **19.08.2015**
(21) Anmeldenummer: 06818402.7
(22) Anmeldetag: 07.11.2006
(51) Int. Cl.: B32B 7/00, B29C 45/00

(54) **UMGEFORMTES FLÄCHIGES HALBZEUG, STRUKTUR- BZW. HYBRIDBAUTEIL UND VERFAHREN ZUR HERSTELLUNG EINES DERARTIGEN HALBZEUGS BZW. BAUTEILS**
SHAPED TWO-DIMENSIONAL SEMIFINISHED PART, STRUCTURED OR HYBRID COMPONENT AND METHOD FOR PRODUCING SUCH A SEMIFINISHED PART OR COMPONENT
PRODUIT SEMI-FINI PLAT CONFORMÉ, COMPOSANT STRUCTUREL OU HYBRIDE ET PROCÉDÉ DE FABRICATION D'UN TEL PRODUIT SEMI-FINI OU D'UN TEL COMPOSANT

(30) Priorität: 07.11.2005 DE 102005053357; 20.12.2005 DE 102005061280
(43) Veröffentlichungstag der Anmeldung: 23.07.2008
(73) Patentinhaber: Daimler AG, 70327 Stuttgart (DE)
(72) Erfinder: EHRENSTEIN, Gottfried, W., 91058 Erlangen (DE); AL-SHEYYAB, Ahmad, 91052 Erlangen (DE); MÜLLER, Norbert, 94032 Passau (DE); DREBINGER, Ludwig, 91074 Herzogenaurach (DE); SCHMID, Michael, 90439 Nürnberg (DE)
(74) Vertreter: JENSEN & SON
(86) Internationale Anmeldenummer: PCT/EP2006/010657
(87) Internationale Veröffentlichungsnummer: WO 2007/051652

(56) Entgegenhaltungen:
- EP-A2- 1 044 866

## Beschreibung

Die Erfindung betrifft ein umgeformtes flächiges Halbzeug, ein Struktur- bzw. Hybridbauteil und ein Verfahren zur Herstellung eines derartigen Halbzeugs bzw. Bauteils.

Insbesondere zur Gewichtseinsparung können bei vielen Anwendungsfällen vorhandene Blechstrukturen durch Kunststoffteile ersetzt werden. Oftmals genügen jedoch die dadurch erzielten Bauteileigenschaften nicht den Festigkeits- und/oder Verformungsanforderungen. Zur gezielten Beeinflussung der Eigenschaften von Konstruktionsbauteilen bei möglichst geringem Bauteilgewicht können die Materialien derart kombiniert werden, dass sich die gewünschten Zielkonflikte lösen lassen. So lassen sich dünnwandige Blechstrukturen durch eine geeignete Kombination mit Kunststoffstrukturen leichter als eine vergleichbare Struktur ganz aus Blech und vielfach auch kostengünstiger fertigen. Dennoch weisen diese Bauteile eine ausreichende mechanische Leistungsfähigkeit auf. Der Kunststoff kann dabei einerseits zu einer Stabilisierung des Blechs dienen, was sich in einer erhöhten Knick- bzw. Beulsteifigkeit niederschlagen kann, so dass die mechanischen Eigenschaften des Blechs optimal genutzt werden können. Andererseits ermöglicht der Kunststoff durch seine rationelle Verarbeitbarkeit und die sich ergebenden konstruktiven Freiheiten oftmals große Kostenreduzierungen.

Die meist aus Metall und Kunststoff bestehenden Teile werden üblicherweise als Hybridbauteile bezeichnet und lassen sich aufgrund ihrer vielfältigen konstruktiven Freiheitsgrade für die unterschiedlichsten Zwecke einsetzen, bspw. als Konstruktionselemente im Fahrzeug- oder Flugzeugbau. Die Hybridbauteile weisen den besonderen Vorteil auf, dass gezielt die Vorteile der unterschiedlichen Werkstoffe genutzt und miteinander kombiniert werden können.

Bei den bisher bekannten Hybridbauteilen werden vor allem großflächige, vorgeformte metallische Teile bzw. umgeformte Bleche in ein Spritzgießwerkzeug eingelegt und mit zusammenhängenden Kunststoffbereichen umspritzt. Die an dem Metallteil angespritzten Kunststoffstrukturen, die oft mit Verstärkungsrippen versehen sind, erhöhen die Stabilität und die Tragfähigkeit des Metallteils unter verschiedenen auftretenden Beanspruchungen, da auf diese Weise die einwirkenden Kräfte gezielt in das Bauteil eingeleitet und dort verteilt werden können. Dieses Verfahren wird oftmals auch als In-Mould-Assembly (IMA) bezeichnet, da hierbei die Kunststoffstrukturen an die Blechstruktur angespritzt werden. Davon kann das sog. Post-Moulding-Assembly (PMA) unterschieden werden, bei dem beide Komponenten getrennt hergestellt und anschließend miteinander verbunden werden.

Aus der EP 0 370 342 B1 ist ein als Träger im Kraftfahrzeug einsetzbares Leichtbauteil in Hybridbauweise bekannt, das einen aus Metall bestehenden, schalenförmigen Grundkörper aufweist, in dessen Innenraum Verstärkungsrippen angeordnet sind. Die Verstärkungsrippen bestehen aus eingespritztem Kunststoff und sind mit dem Metallgrundkörper an mehreren Stellen verbunden, indem der Kunststoff im Metallteil angeordnete Durchbrüche durchsetzt und über die Flächen der Durchbrüche hinausreicht. Die Verstärkungsrippen durchsetzen zur Erzielung einer hohen Steifigkeit und Festigkeit den Innenraum des U-förmig ausgebildeten Metallgrundkörpers.

Die EP 0 672 576 B1 beschreibt eine in eine Fahrzeugkarosserie einmontierbare Baueinheit für den Stirnrand- und Cockpitbereich eines Personenkraftwagens. Die Baueinheit ist in ihrer tragenden Substanz aus zwei Verbundbauteilen gebildet, die jeweils aus tiefgezogenem Blech und daran angespritztem Kunststoff bestehen. Die Blechteile sind der auftretenden Belastung entsprechend geformt und mit Bohrungen, Durchbrüchen u. dgl. als Verankerungsstellen für den angespritzten Kunststoff zum formschlüssigen Verankern desselben am Blechteil versehen. Der angespritzte Kunststoff wird derart geformt, dass mit ihm eine die Blechteile versteifende Verrippung und entsprechende Aufnahmen für diverse Anbauteile gebildet werden.

Die EP 1 044 866 B1 beschreibt weiterhin ein zusammengesetztes Bauteil mit einem schalenartigen Oberteil und einem Verstärkungsteil, die über diskrete Verbindungsstellen miteinander verbunden sind, wobei diese beiden Teile aus Materialien mit unterschiedlichen thermischen Ausdehnungskoeffizienten bestehen. Im Bereich der Verbindungsstellen zwischen den beiden Teilen sind Profilelemente aus elastischem Material wirksam.

Ein erstes Ziel der Erfindung besteht darin, ein Hybridbauteil zur Verfügung zu stellen, das bei einfacher Herstellbarkeit verbesserte mechanische Eigenschaften aufweist.

Dieses erste Ziel der Erfindung wird mit dem Gegenstand des unabhängigen Anspruchs 1 erreicht. Merkmale vorteilhafter Weiterbildungen der Erfindung ergeben sich aus den davon abhängigen Ansprüchen.

Ein vorgeformtes bzw. umgeformtes flächiges Halbzeug mit den Merkmalen des Anspruchs 1 umfasst wenigstens eine versteifende Einlage aus Metall oder Kunststoff, die zumindest teilweise formschlüssig in spritzgegossenem Kunststoff eingebettet ist. Die versteifende Einlage weist zumindest einen Bereich auf, der primär vom Schmelzedruck des im Spritzgießverfahren verarbeiteten Kunststoffes dauerhaft verformt ist. Die versteifende Einlage kann insbesondere aus Metallblech bestehen, wobei hier die unterschiedlichsten Materialien und Blechdicken zum Einsatz kommen können, je nach geforderter Bauteilfestigkeit und gewünschtem Anwendungsfall. Als Material für das Metallblech eignet sich insbesondere Leichtmetall wie Aluminium- oder Magnesiumlegierungen. Daneben kann jedoch auch herkömmliches Stahlblech bzw. hochfeste Stahlbleche zum Einsatz kommen. Das Metall- oder Kunststoffblech ist durch den spritzgegossenen Kunststoff derart plastisch verformt, dass eine Sicke, ein Ausbruch oder dergleichen in der versteifenden Einlage gebildet ist, die formschlüssig mit dem gespritzten Kunststoff verbunden ist, so dass ein mechanisch sehr widerstandsfähiges und individuell in seinen Festigkeitseigenschaften einstellbares Hybridbauteil gebildet ist.

Die versteifende Einlage kann wie erwähnt insbesondere aus Metallblech gebildet sein. Als versteifende Einlage eignet sich jedoch auch Kunststoff, insbesondere Verbundkunststoffe wie GFK, CFK oder dergleichen. Ein wesentlicher Aspekt der Erfindung besteht darin, dass eine direkte plastische Umformung oder eine Bruchstelle der versteifenden Einlage und die Ausbildung einer formschlüssigen Verbindung eines Hybridbauteils durch den Schmelzedruck des spritzgegossenen Kunststoffes erfolgt. Auf diese Weise kann eine Prozessintegration durch die Herstellung von Verbindungen direkt im Werkzeug unter Wegfall der Vorarbeit an der versteifenden Einlage erreicht werden.

Wenn im vorliegenden Zusammenhang von Einspritzdruck, Schmelzedruck und Nachdruck beim Spritzgießvorgang die Rede ist, so sollen diese Begriffe nachfolgend kurz definiert werden. Der Schmelzedruck wirkt überall dort, wo flüssige Schmelze strömt, was während der Einspritzphase der Fall ist. Der Schmelzedruck kann jedoch auch noch in der sog. Nachdruckphase wirken, wenn die flüssige Schmelze unter einen (quasi-)statischen Druck gesetzt wird. Somit ist sowohl in der Einspritzphase als auch bei der Nachdruckphase eine Umformung möglich, da bei beiden Phasen jeweils ein Schmelzedruck auf das Halbzeug wirkt. Entsprechend dieser Definition wird im vorliegenden Zusammenhang meist der präzisere Begriff "Schmelzedruck" anstelle des Begriffs "Einspritzdruck" verwendet.

Eine bevorzugte Ausgestaltung der Erfindung sieht vor, dass der verformte Bereich der Einlage zumindest abschnittsweise durchbrochen ist. Hierbei bricht oder reißt das Blech bzw. die Kunststoffeinlage durch die Erhöhung des Schmelzedrucks, so dass der eingespritzte Kunststoff anschließend durch die Bruchstelle hindurch in die Umformkavität fließen und den Formschluss herstellen kann. Durch eine geeignete Gestaltung der Umformkavität und der Prozessführung ist es möglich, den Blechbruch bzw. den Bruch der Kunststoffeinlage zu kontrollieren. Mit dem Schmelzedruck kann die Einlage umformt und/oder durchbrochen werden, was die rationelle Herstellung von Sicken und sogenannten Clinchverbindungen ermöglicht. In Versuchen konnte nachgewiesen werden, dass sich sowohl bei Magnesiumblech als auch bei Aluminiumblech Umformgrade erreichen lassen, wie sie ansonsten typischerweise nur mit Umformverfahren erreichbar sind, die einen gesonderten Bearbeitungsschritt erforderlich machen. Zudem sind verschiedene Gestaltungen der Clinchverbindungen denkbar, die zum Teil auch ohne eine vorherige Bearbeitung des Blechs auskommen.

Die Einlage kann im verformten Bereich wenigstens eine vorgeformte Sicke bzw. einen vorgeformten Durchbruch, insbesondere einen Schlitz oder mehrere Schlitze aufweisen. In dem vom Schmelzedruck des spritzgegossenen Kunststoffes verformten Bereich ist wenigstens ein Durchbruch bzw. Schlitz aufgeweitet und/oder in zumindest einem Randbereich erweitert. Vorzugsweise ist der vom Schmelzedruck des spritzgegossenen Kunststoffes verformte Bereich der Einlage weitgehend vollständig vom spritzgegossenen Kunststoff umgeben bzw. in diesem eingebettet.

Eine ebenfalls sehr vorteilhafte Variante der Erfindung kann vorsehen, dass Sicken oder Einprägungen nahezu beliebiger Form während des Spritzgießvorganges in das Material der Einlage eingebracht werden können, insbesondere in Metalleinlagen aus Stahl- oder Leichtmetallblech. So können bspw. in Trägerbauteile geeignete Längssicken eingeprägt werden, die zur Materialversteifung beitragen, ohne dass das Material hierbei überdehnt oder durchbrochen werden muss. Alternativ oder zusätzlich können die erwähnten Clinchverbindungen hergestellt werden. Darüber hinaus kann es sinnvoll sein, an geeigneten Stellen Diagonalsicken o. dgl. einzubringen, was die Torsionssteifigkeit derartiger Trägerbauteile erhöhen kann.

Das erfindungsgemäße vorgeformte flächige Halbzeug eignet sich insbesondere zur Herstellung einer Verbundstruktur bzw. eines Hybridbauteils gemäß Anspruch 10. Derartige Strukturen bzw. Bauteile können als vormontierbare Konstruktionselemente für vielfältige Zwecke eingesetzt werden, bspw. im Fahrzeugbau, im Schienenfahrzeug- oder im Flugzeugbau.

Ein weiteres Ziel der Erfindung besteht darin, ein rationelles Verfahren zur Herstellung eines vorgeformten flächigen Halbzeuges zur Verfügung zu stellen, das zur Ausbildung von leichten und stabilen Hybridbauteilen geeignet ist.

Dieses weitere Ziel der Erfindung wird mit einem Verfahren gemäß unabhängigem Anspruch 12 erreicht. Merkmale vorteilhafter Weiterbildungen ergeben sich aus den davon abhängigen Ansprüchen.

Ein erfindungsgemäßes Verfahren zur Herstellung eines flächigen Halbzeugs bzw. einer Verbundstruktur, das/die wenigstens eine versteifende Einlage aus Metall oder Kunststoff aufweist, die im Spritzgießverfahren zumindest teilweise formschlüssig mit Kunststoff umspritzt wird, sieht vor, dass die versteifende Einlage zumindest in einem Bereich mittels des Schmelzedrucks des im Spritzgießverfahren verarbeiteten Kunststoffes dauerhaft verformt wird. Das erfindungsgemäße Verfahren ermöglicht die Herstellung von Hybridbauteilen bzw. -halbzeugen, die aus mindestens zwei unterschiedlichen Materialien bestehen, typischerweise aus Leichtmetallblech und dieses umschließenden Kunststoff. Mittels des Verfahrens können in einfacher und sehr effizienter Weise mittels eines einzigen Verarbeitungsschrittes die gewünschten Hybridstrukturen hergestellt werden, die bei sehr geringem Gewicht eine hohe Strukturfestigkeit bieten können. Die Formgebung ermöglicht es, dem Bauteil ein gewünschtes Festigkeits- und Verformungsverhalten zu geben, was mit herkömmlichen Bauteilen nur mit deutlich höherem Fertigungsaufwand und meist mit höheren Bauteilgewichten realisierbar ist.

Eine bevorzugte Variante des erfindungsgemäßen Verfahrens sieht vor, dass der vom Schmelzedruck des spritzgegossenen Kunststoffes verformte Bereich der Einlage plastisch verformt wird. Eine alternative oder damit kombinierbare Ausführungsvariante dieses Verfahrens sieht vor, dass der verformte Bereich der Einlage vom Schmelzedruck des Kunststoffes zumindest abschnittsweise durchbrochen wird. Insbesondere kann im verformten Bereich der Einlage während des Spritzgießverfahrens zumindest ein Versagensbruch oder -riss erzeugt werden. Ggf. können auch mehrere Risse auftreten. Der typische Schmelzedruck beim Spritzgießverfahren von mehr als 200 bar kann nach Füllen der Form gezielt erhöht werden, um die gewünschten Materialbrüche bzw. -risse zu erzeugen, die zum gewünschten verbesserten Formschluss zwischen der versteifenden Metall- bzw. Kunststoffeinlage und dem spritzgegossenem Kunststoff führen.

Bei einer weiteren bevorzugten Variante des erfindungsgemäßen Verfahrens wird die Einlage im zu verformenden Bereich vor dem Spritzgießen mit wenigstens einer vorgeformte Sicke bzw. einem vorgeformten Durchbruch, insbesondere mit einem Schlitz oder mehreren Schlitzen, versehen. Hierdurch kann beim Füllen der Form erreicht werden, dass in dem vom Schmelzedruck des spritzgegossenen Kunststoffes verformten Bereich der wenigstens eine Durchbruch bzw. Schlitz aufgeweitet und/oder in zumindest einem Randbereich erweitert wird. Weiterhin kann vorgesehen sein, dass der vom Schmelzedruck des spritzgegossenen Kunststoffes verformte Bereich der Einlage weitgehend vollständig vom spritzgegossenem Kunststoff umgeben bzw. in diesem eingebettet wird, wodurch das gewünschte Hybridbauteil gebildet wird, das bei reduziertem Gewicht eine höhere Festigkeit aufweisen kann als ein vergleichbares Stahlblechbauteil oder eines aus spritzgegossenem Kunststoff.

Eine weitere vorteilhafte Variante des erfindungsgemäßen Verfahrens kann vorsehen, dass ein als Einlage verwendetes Metallblech vor oder während des Spritzgießens zusätzlich erwärmt wird. Ggf. kann das Metallblech mittels einer Temperierung des Werkzeugs erwärmt werden.

Zusammenfassend ergeben sich die folgenden Aspekte der Erfindung:

Spritzgegossene Kunststoff/Metall-Hybridstrukturen kombinieren die strukturellen Vorteile beider Werkstoffe, wodurch sich ihr Leistungsvermögen deutlich erhöht. Einfach umgeformte Bleche werden durch eine Kunststoffverrippung versteift und geometrisch stabilisiert, im Arbeitsaufnahmevermögen verbessert sowie gleichzeitig um Funktionselemente erweitert. Die Nutzung werkstofflicher, konstruktiver und fertigungstechnischer Synergien ermöglicht eine integrierte, kostengünstige Fertigung tragender Leichtbauteile. Die resultierenden Bauteileigenschaften werden durch Werkstoffauswahl, Konstruktion und Prozessführung bestimmt.

Während Stahleinlegeteile in der Hybridbauweise etabliert sind, wird auch der Einsatz von Leichtmetallen in Erwägung gezogen. Das ökonomische und ökologische Interesse gilt der Einsparung von Gewicht, Energie und Kosten durch eine Leichtbauweise. Neben Aluminium ist Magnesiumblech aufgrund seiner niedrigen Dichte von besonderem Interesse, zumal für die nächsten Jahre deutliche Preissenkungen prognostiziert werden und die Rezyklierbarkeit im Vergleich zu Stahl verbessert ist. Zudem besitzen beide Leichtmetalle eine den in der Hybridtechnik verwendeten Standardthermoplasten ähnliche Wärmeausdehnung, was zu verringerten thermische Bauteilbelastungen führt.

Eine große Herausforderung besteht in der Einleitung und Verteilung der äußeren mechanischen Beanspruchung im Hybridbauteil. Hierfür ist eine angepasste Verbindungstechnik von großer Bedeutung, welche im Anschluss zur Einzelfertigung der Komponenten (Post-Moulding-Assembly, PMA) oder auch integriert im Spritzgießprozess (In-Mould-Assembly, IMA) erfolgen kann. Die PMA-Technik wird durch Kleben oder Kragenfügen realisiert. Beim IMA basieren die Verbindungselemente in der Regel auf Formschluss z.B. durch Hinterschneidungen oder Bohrungen im Blech, und die Herstellung der Hybridstrukturen ist gleichzeitig sowohl Urform- als auch Montageprozess. Die Notwendigkeit mechanisch fester und belastungsgerecht platzierter Verbindungselemente steigt mit der Bauteilkomplexität und der Anzahl der Einlegeteile. Wichtiges Ziel für eine rationelle Fertigung ist die Prozesskettenverkürzung, welche beim IMA durch Zusammenführung einzelner Prozessschritte im Spritzgießwerkzeug erreicht werden kann.

Die direkte Umformung von Leichtmetallblechen durch den Schmelzedruck zur Herstellung formschlüssiger Verbindungen eröffnet eine neue Möglichkeit der Prozessintegration. Hinzu kommt, dass die Umformbarkeit der Leichtmetallbleche bei hohen Temperaturen, wie sie im Spritzgießprozess vorliegen, deutlich zunimmt. Die Umformbarkeit von Leichtmetallblechen wurde in einem Modell-Werkzeug mit Umformkavität überprüft. Es wurden Aluminium- und Magnesiumbleche eingesetzt und mit dem in der Hybridtechnik verwendeten Standardthermoplasten PA6-GF30 angespritzt. Das Blech wurde eingelegt und durch den Kunststoff-Schmelzedruck in die Umformkavität hineindrückt. Es können zwei Varianten unterschieden werden: Die Einbringung von Sicken sowie die Herstellung einer formschlüssigen Clinchverbindung. Beim Clinchen wurden als Vorbearbeitung im Blech Schlitze verschiedener Geometrien eingebracht.

Das Umformverhalten von Magnesium- und Aluminiumblech sowie die Verbundfestigkeit der Clinchverbindung wurden charakterisiert und mit dem konventionellen Nietverbund verglichen. Die Geometrie des im Blech eingebrachten Clinch-Schlitzes beeinflusst mit dem Umformverhalten die Festigkeit der Verbindung. Die Verbundfestigkeiten der Verbindungen wurden mechanisch auf Zugscherung geprüft.

Es wurden unter anderem Probekörper mit unterschiedlichen Clinchverbunden (Querschnittsfläche 5...10 mm²) hergestellt, mechanisch geprüft und die Festigkeit mit Nietverbunden (Durchmesser 3 mm, Querschnittsfläche 7 mm²) verglichen. Bei diesen Versuchen hat sich gezeigt, dass alle hergestellten Clinchverbunde mechanisch höher belastbar sind als der Nietverbund. Dies kann mit einer Vergrößerung von Verbundquerschnitt und -höhe infolge der Blechumformung und der damit verbundenen vergrößerten Aufnahmefläche der mechanischen Spannungen begründet werden.

Eine weitere Prozessintegration konnte durch die Herstellung von Verbindungen direkt im Werkzeug unter Wegfall der Vorarbeit des Blechs erreicht werden. Die Machbarkeit wurde aufgezeigt, indem das Blech durch Erhöhung des Schmelzedrucks bricht und der Kunststoff anschließend durch die Bruchstelle hindurch in die Umformkavität fließt und den Formschluss herstellt. Es konnte gezeigt werden, dass die Verbundfestigkeit solcher ohne Blechvorarbeit hergestellter Verbundteile die der Clinch- und Nietverbunde übertrifft. Für eine optimierte Herstellung solcher Verbindungen ist das Versagen des Leichtmetallblechs zu untersuchen. Die Geometrie der Bruchzone bestimmt schließlich die mechanische Belastbarkeit der Verbindung. Durch eine geeignete Gestaltung von Umformkavität und Prozessführung erscheint es möglich, den Blechbruch zu kontrollieren.

Somit konnte nachgewiesen werden, dass das lokale Umformen von Metallblechen direkt im Spritzgießwerkzeug eine vielversprechende Möglichkeit der formschlüssigen Verbindungstechnik spritzgegossener Kunststoff/Metall-Hybridstrukturen darstellt. Mit dem Spritzdruck kann das Blech umgeformt oder durchbrochen werden, was die rationelle Herstellung von Sicken und Clinchverbindungen ermöglicht. Es sind verschiedene Gestaltungen der Clinchverbindungen denkbar, die z.T. auch ohne eine Vorbearbeitung des Blechs auskommen.

Bei der Einbringung von Sicken ist durch die Gestaltung von Prozessführung und Geometrie eine Optimierung des Umformverhaltens möglich. Es konnten sowohl bei Magnesium als auch bei Aluminium Umformgrade wie beim Hydroformen erreicht werden. Bei Clinchverbindungen ist die Geometrie der im Blech eingearbeiteten Schlitzung von zentraler Bedeutung. Die Machbarkeit von Clinchverbunden ohne Blechvorbearbeitung wurde erfolgreich durchgeführt.

Die Erfindung wird nachfolgend anhand bevorzugter Ausführungsbeispiele unter Bezugnahme auf die beiliegenden Zeichnungen näher erläutert. Die Ausführungsbeispiele dienen zum besseren Verständnis der wesentlichen Aspekte der Erfindung. Sie beschränken die erfinderische Lehre jedoch in keiner Weise.
Fig. 1 zeigt in einem schematischen Schaubild verschiedene Möglichkeiten der Prozessintegration beim Umformen von Leichtmetall im Spritzgießwerkzeug.
Fig. 2 zeigt in einem schematischen Schaubild die Prozessintegration bei der Herstellung von Hybridbauteilen.
Fig. 3a zeigt in schematischer Darstellung die Herstellung von Sicken durch den Schmelzedruck.
Fig. 3b zeigt in schematischer Darstellung die Herstellung einer Clinchverbindung durch den Schmelzedruck.
Fig. 4 stellt verschiedene Clinchverbindungen einer Nietverbindung gegenüber.
Fig. 5 verdeutlicht in einem Diagramm die mechanische Festigkeit von Clinchverbindungen gegenüber Nietverbindungen.
Fig. 6 verdeutlicht die aufeinander folgenden Verfahrensschritte bei der Erzeugung von Verbindungen im Werkzeug ohne Vorarbeiten im Blech.
Fig. 7 zeigt eine schematische Perspektivdarstellung einer mittels des Schmelzedrucks beim Spritzgießen in ein Blech eingebrachten Sicke.
Fig. 8 zeigt eine schematische Perspektivdarstellung einer mittels des Schmelzedrucks beim Spritzgießen in ein Blech eingebrachten Sicke, bei welcher der spritzgegossene Kunststoff durch einen Materialriss hindurch getreten ist.
Fig. 9 verdeutlicht in schematischer Perspektivdarstellung eine beginnende Rissbildung, die durch einen hohen Einspritzdruck bzw. Schmelzedruck beim Spritzgießen erzeugt wurde.
Fig. 10 verdeutlicht verschiedene Varianten von Schlitzgeometrien, die zur Herstellung von Clinchverbindungen in das Blech eingebracht werden können.
Fig. 11 verdeutlicht in schematischen Darstellungen anhand möglicher Konturen von Sicken den Zusammenhang zwischen dem Umformgrad und dem Umformradius.
Fig. 12 zeigt anhand eines Diagramms einen Zusammenhang zwischen Einspritzdruck und Umformverhältnis bei verschiedenen Umformgeometrien.
Fig. 13 zeigt anhand einer schematischen Schnittdarstellung verschiedene Umformgeometrien, -radien und -tiefen sowie verschiedene Kantenradien von eingebrachten Sicken.
Fig. 14 zeigt anhand eines Diagramms einen Erwärmungsverlauf während des Umformprozesses.
Fig. 15 zeigt anhand eines Diagramms den Zusammenhang zwischen der Vorwärmtemperatur des Werkzeugs und dem Umformverhältnis für verschiedene Werkstoffe bzw. Umformgeometrien.
Fig. 16 zeigt anhand eines Diagramms den Zusammenhang zwischen Umformdurchmesser und Umformverhältnis bei verschiedenen Einspritzdrücken sowie verschiedenen Blechmaterialien.
Fig. 17 zeigt anhand eines Diagramms den Zusammenhang zwischen Einspritzdruck und Umformverhältnis bei verschiedenen Umformdurchmessern sowie verschiedenen Blechmaterialien.
Fig. 18 zeigt anhand eines Diagramms den Zusammenhang zwischen Einspritzdruck und Umformverhältnis bei verschieden gewählten Kantenradien sowie verschiedenen Blechmaterialien.
Fig. 19 zeigt in schematischen Darstellungen den Prozess des Einbringens von Längssicken in ein U-förmiges Trägerbauteil, aus dem ein Hybridbauteil hergestellt wird.
Fig. 20 zeigt das fertig geformte Trägerbauteil entsprechend Fig. 19 in schematischer Perspektivdarstellung.
Fig. 21 zeigt in schematischen Darstellungen den Prozess des Einbringens von Clinchverbindungen in ein U-förmiges Trägerbauteil, aus dem ein Hybridbauteil hergestellt wird.
Fig. 22 zeigt in einem perspektivischen Teilausschnitt eine Diagonalsicke, die in eine Flanke eines U-förmigen Trägerbauteils entsprechend Fig. 21 eingebracht ist.

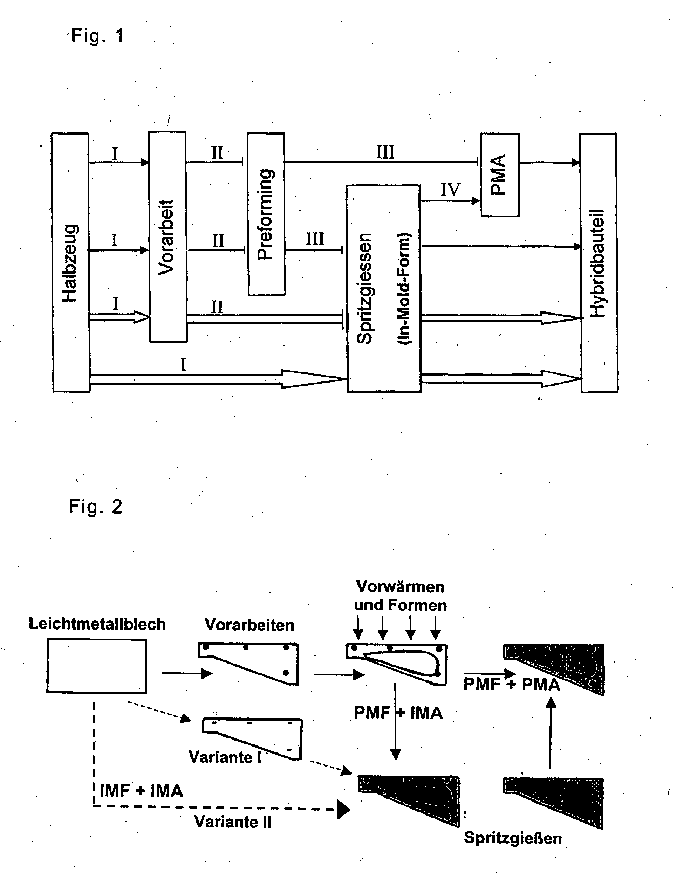

Das schematische Schaubild der Fig. 1 zeigt verschiedene Möglichkeiten der Prozessintegration im Spritzgießwerkzeug beim Umformen von Leichtmetall. Verdeutlicht werden die unterschiedlichen Möglichkeiten der Verbindungstechnik bei Kunststoff/Metall-Hybridstrukturen. Derartige spritzgegossene Kunststoff/Metall-Hybridstrukturen kombinieren die strukturellen Vorteile beider Werkstoffe, wodurch sich ihr Leistungsvermögen deutlich erhöht. Einfach umgeformte Bleche werden durch eine Kunststoffverrippung versteift und geometrisch stabilisiert, im Arbeitsaufnahmevermögen verbessert sowie gleichzeitig um Funktionselemente erweitert. Die Nutzung werkstofflich bedingter konstruktiver und fertigungstechnischer Synergien ermöglicht eine integrierte kostengünstige Fertigung tragender Leichtbauteile. Die resultierenden Bauteileigenschaften werden durch Werkstoffauswahl, Konstruktion und Prozessführung bestimmt.

Ein wichtiger Parameter ist die Einleitung und Verteilung der äußeren mechanischen Beanspruchung in das Hybridbauteil. Hierfür ist eine angepasste Verbindungstechnik von großer Bedeutung, welche im Anschluss zu Einzelteilfertigung der Komponenten (Post-Moulding-Assembly, PMA) oder auch integriert im Spritzgießprozess (In-Moulding-Assembly, IMA) erfolgen kann. Die PMA-Technik wird durch Kleben oder Kragenfügen realisiert. Bei der IMA-Technik basieren die Verbindungselemente i.d.R. auf Formschluss, z.B. durch Hinterschneidungen oder Bohrungen im Blech, so dass die Herstellung der Hybridstrukturen gleichzeitig sowohl ein Urform- als auch ein Montageprozess ist.

Die Notwendigkeit mechanisch fester und belastungsgerecht platzierter Verbindungselemente steigt mit der Bauteilkomplexität und der Anzahl der Einlegeteile. Wichtiges Ziel für eine rationelle Fertigung ist die Prozesskettenverkürzung, welche beim IMA durch Zusammenführung einzelner Prozessschritte im Spritzgießwerkzeug erreicht werden kann, was anhand der Fig. 1 illustriert ist. Die direkte Umformung von Leichtmetallblechen durch den Schmelzedruck zur Herstellung formschlüssiger Verbindungen eröffnet eine neuartige Möglichkeit der Prozessintegration. Hinzu kommt, dass die Umformbarkeit der Leichtmetallbleche bei hohen Temperaturen, wie sie im Spritzgießprozess vorliegen, deutlich zunimmt. Für das lokale Umformen von Leichtmetall gemäß der vorliegenden Erfindung können neue Begriffe definiert werden, nämlich sog. Pre-Mould-Forming (PMF) und sog. In-Mould-Forming (IMF). Bei der Herstellung von Hybridbauteilen wird in der Regel eine Kombination dieser Konzepte durchgeführt.

Die besonderen Verfahrensvorteile werden bei Betrachtung der Fig. 1 unmittelbar deutlich, da hierbei, ausgehend vom Halbzeug, nur noch ein einziger Verfahrensschritt (I) des Spritzgießens (IMF) notwendig ist, um zum fertigen Hybridbauteil zu gelangen. Die bei den herkömmlichen Verfahren notwendigen Schritte der Vorarbeit (I), des Preformings (II), des Spritzgießens (III) sowie ggf. des Post-Moulding-Assembly (IV) können durch den Schritt des IMF ersetzt werden.

Das schematische Schaubild der Fig. 2 verdeutlicht die verschiedenen Möglichkeiten der Prozessintegration bei der Herstellung von Hybridbauteilen. Aus einem Leichtmetallblech kann durch verschiedene Vorarbeiten, optionales Vorwärmen und Formen und anschließendes Spritzgießen das gewünschte Hybridbauteil gefertigt werden.

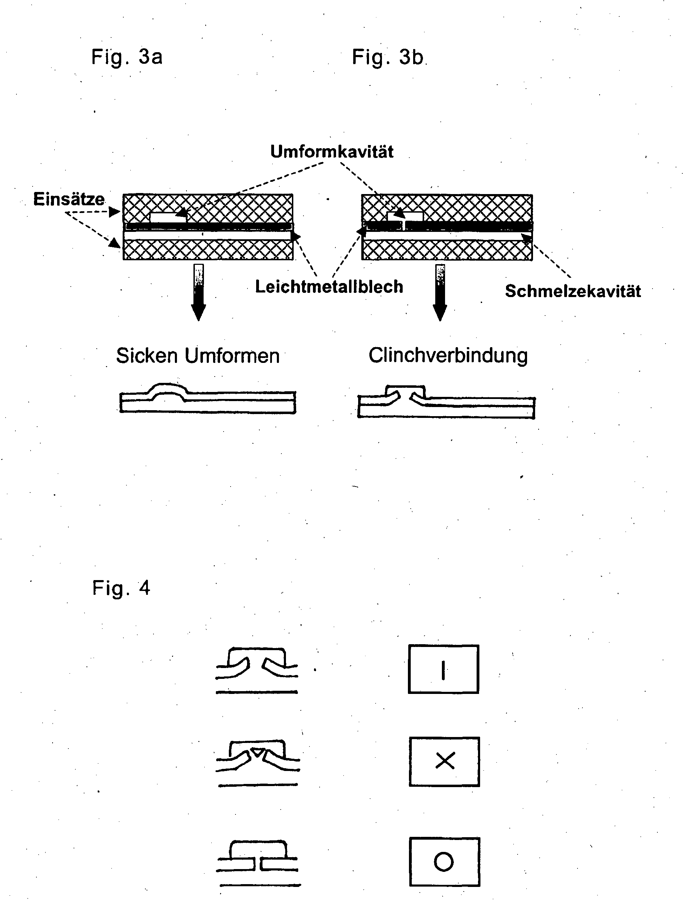

Die schematischen Darstellungen der Fig. 3 verdeutlichen die Herstellung von Sicken und Clinchverbindungen. Fig. 3a zeigt die Herstellung von Sicken durch den Schmelzedruck. Fig. 3b zeigt die Herstellung einer Clinchverbindung mittels des Umformens. Die Umformbarkeit von Leichtmetallblechen wurde in einem Modell-Werkzeug mit Umformkavität überprüft. Es wurden Aluminium- und Magnesiumbleche eingesetzt und mit dem in der Hybridtechnik verwendeten Standardthermoplasten PA6-GF30 angespritzt. Das Blech wurde eingelegt und durch den Kunststoff-Schmelzedruck in die Umformkavität hineindrückt. Es können zwei Varianten unterschieden werden: Die Einbringung von Sicken sowie die Herstellung einer formschlüssigen Clinchverbindung. Beim Clinchen wurden als Vorbearbeitung im Blech Schlitze verschiedener Geometrien eingebracht.

Die schematische Darstellung der Fig. 4 stellt verschiedene Clinchverbindungen einer Nietverbindung gegenüber. In den oberen Bildern ist eine Clinchverbindung mit einfachem Schlitz (10 x 0,5 mm) gezeigt. In den mittleren Bildern ist eine Clinchverbindung mit einem Kreuzschlitz (2 x 10 x 0,5 mm) gezeigt. In den unteren Bildern ist eine einfache Nietverbindung mit einem Durchmesser von 3 mm gezeigt.

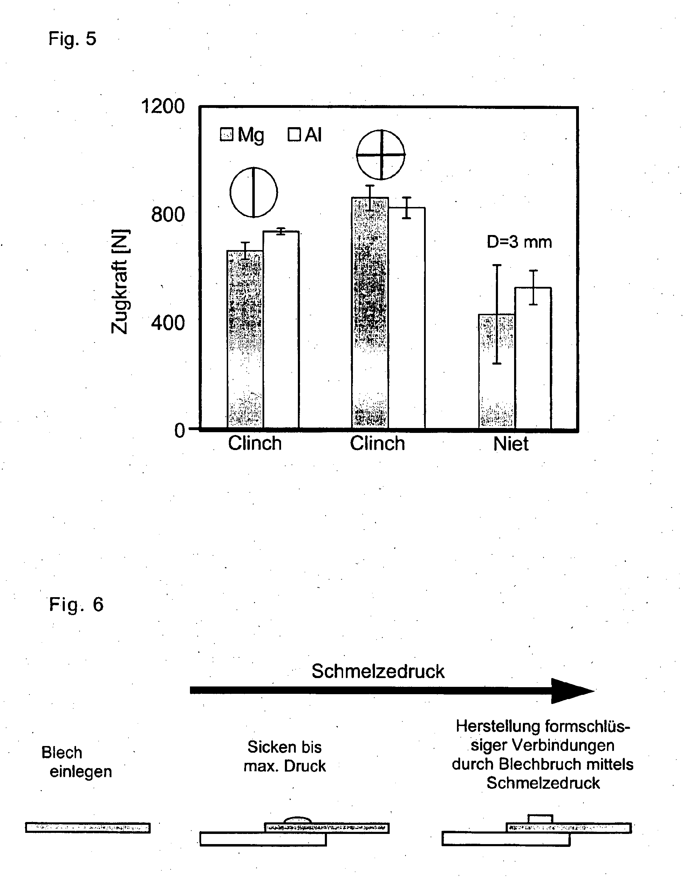

Fig. 5 verdeutlicht in einem Diagramm die mechanische Festigkeit bei der Zugscherprüfung von Clinchverbindungen gegenüber Nietverbindungen. Das Schaubild zeigt die mechanische Festigkeit derartiger Clinchverbindung im Vergleich zu herkömmlichen Nietverbindungen. Die Geometrie des im Blech eingebrachten Clinch-schlitzes beeinflusst mit dem Umformverhalten die Festigkeit der Verbindung. Die Verbundfestigkeit der Verbindungen wurden mechanisch auf Zugscherung geprüft. Es wurden Probenkörper mit unterschiedlichen Clinchverbund (Querschnittsfläche 5 bis 10 mm²) mechanisch geprüft und die Festigkeit mit Nietverbunden (Durchmesser 3 mm, Querschnittsfläche 7 mm²) verglichen. Es hat sich gezeigt, dass alle hergestellten Clinchverbunde mechanisch höher belastbar sind als ein vergleichbarer Nietverbund. Dies kann mit einer Vergrößerung von Verbundquerschnitt und -höhe in Folge der Blechumformung und der damit verbundenen vergrößerten Aufnahmefläche der mechanischen Spannungen begründet werden.

Eine Prozessintegration konnte durch die Herstellung von Verbindungen direkt im Werkzeug unter Wegfall der Vorarbeit des Blechs erreicht werden. Fig. 6 verdeutlicht die aufeinander folgenden Verfahrensschritte bei der Erzeugung von Verbindungen im Werkzeug ohne Vorarbeiten im Blech. Die Machbarkeit wurde aufgezeigt, indem das Blech durch Erhöhung des Schmelzedrucks bricht und der Kunststoff anschließend durch die Bruchstelle hindurch in die Umformkavität fließt und den Formschluss herstellt. Es konnte gezeigt werden, dass die Verbundfestigkeit solcher ohne Blechvorarbeit hergestellter Verbundteile die der Clinch- und Nietverbunde übertrifft. Für eine optimierte Herstellung solcher Verbindungen ist das Versagen des Leichtmetallblechs zu untersuchen. Die Geometrie der Bruchzone bestimmt schließlich die mechanische Belastbarkeit der Verbindung. Durch eine geeignete Gestaltung von Umformkavität und Prozessführung erscheint es möglich, den Blechbruch zu kontrollieren.

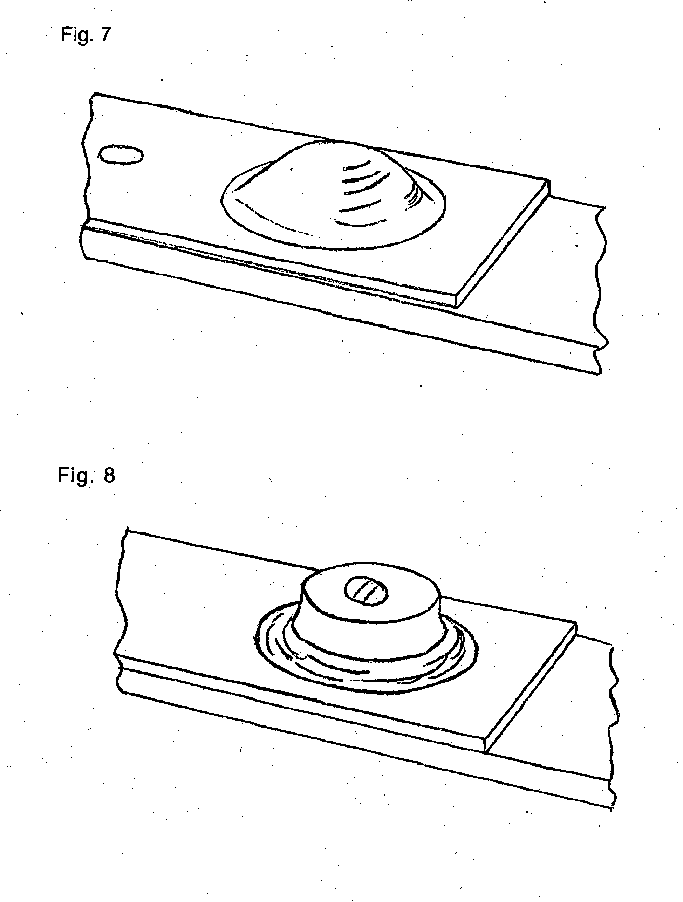

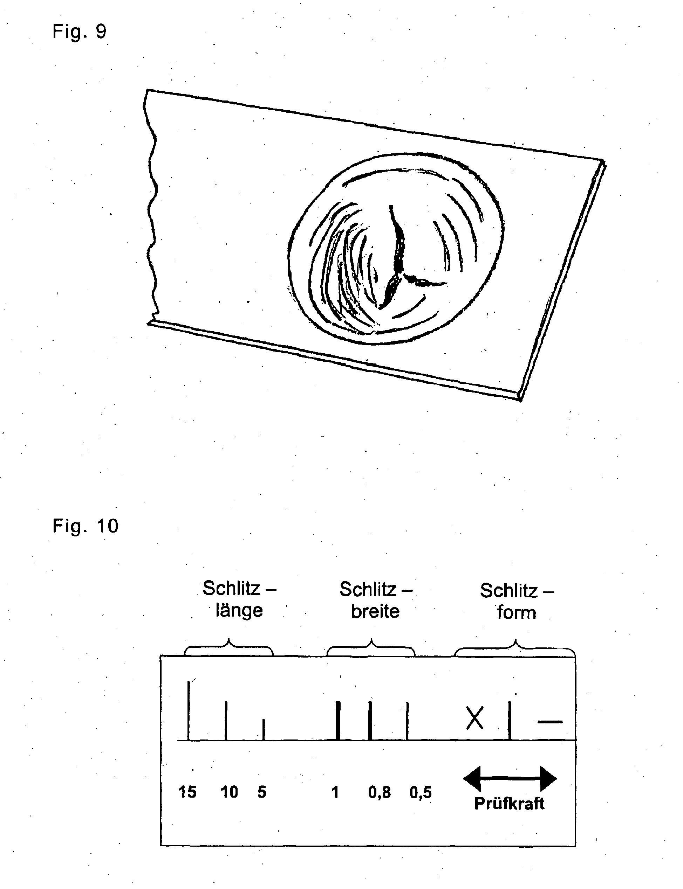

Die schematischen Darstellungen der Fig. 7 zeigt eine mittels des Schmelzedrucks beim Spritzgießen in ein Blech eingebrachten Sicke. Fig. 8 zeigt eine schematische Perspektivdarstellung einer mittels des Schmelzedrucks beim Spritzgießen in ein Blech eingebrachten Sicke, bei welcher der spritzgegossene Kunststoff durch einen Materialriss hindurch getreten ist. Fig. 9 verdeutlicht in schematischer Perspektivdarstellung eine beginnende Rissbildung, die durch einen hohen Schmelzedruck beim Spritzgießen erzeugt wurde.

Die Fig. 10 verdeutlicht verschiedene Varianten von Schlitzgeometrien, die zur Herstellung von Clinchverbindungen in das Blech eingebracht werden können. Für die Ermittlung des Einflusses der Schlitzgeometrie auf die Blechumformung und die daraus resultierenden mechanischen Festigkeiten der Clinchverbindung wurden Länge, Breite und Form der Schlitze variiert. Die Standardgeometrie war der vertikale Schlitz (senkrecht zur Prüfkraft) mit 10 mm Länge und 0,5 mm Breite. Der Vergleich der Festigkeit dieser Varianten wird mit den Ergebnissen der mechanischen Prüfung diskutiert. Während die Schlitzrichtung keinen Einsfluss auf das Umformverhalten hat, konnte es mit dem Kreuzschlitz um 2-3 % verbessert werden. Die Variation der Schlitzlänge und Breite erbrachte folgende Ergebnisse: Mit einer großen Schlitzbreite verringert sich die erzielbare Umformung, und die Clinchverbindung ähnelt einer Nietverbindung. Die Länge des Blechs hat kleinen Einfluss auf die Umformung.

Weitere Versuchsergebnisse bei der Herstellung erfindungsgemäßer Hybridbauteile werden nachfolgend ergänzend diskutiert.

Da der Druck für die Umformung der bedeutendste Parameter ist, kommt der Druckerfassung in der Umformzone des Leichtmetallblechs eine wichtige Rolle zu. Aus Sicht der Kunststoff-Fließfront wurde jeweils ein Druckaufnehmer vor und nach der Umformkavität platziert. Ebenso wurde im Werkzeug ein Temperaturaufnehmer eingebracht, um die Blechtemperatur beim Umformen zu messen. Der Druck wurde als Nachdruck variiert, indem der Umschaltpunkt so gesetzt wurde, dass ohne Nachdruck keine Umformung stattfand. Der Druck wurde schrittweise um 50 der 100 bar gesteigert bis es zum Bruch des Blechs kam. Bei der Ermittlung der Umformgeometrie im Leichtmetallblech wurden die max. Umformung (u) und der Umformradius (r) zueinander in Verhältnis gesetzt.

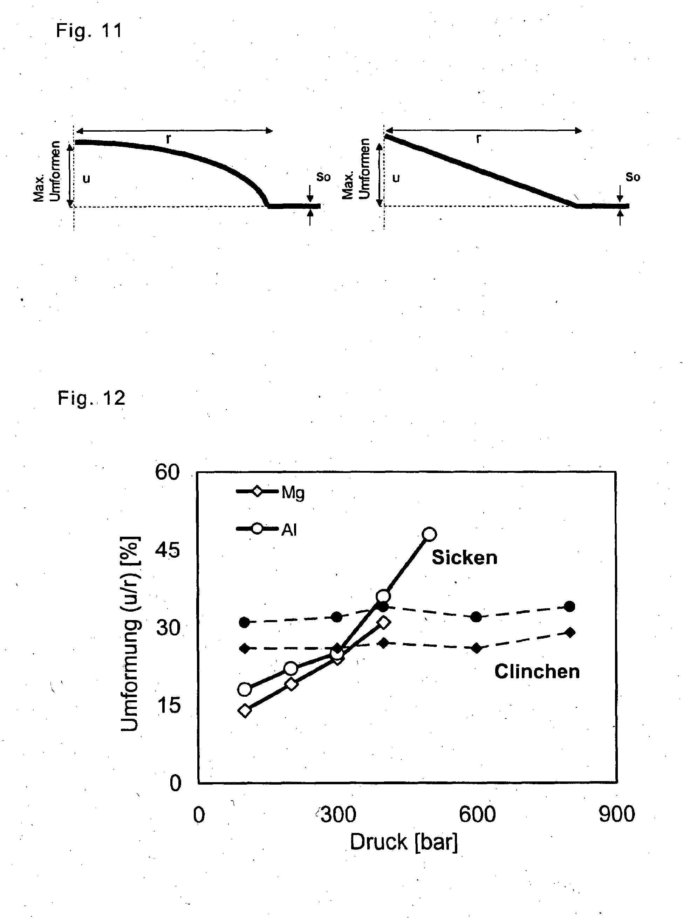

Die schematischen Diagramme der Fig. 11 verdeutlichen den Zusammenhang zwischen maximaler Umformung u und dem Umformradius r bei einer kalottenförmigen Sicke (linkes Diagramm) bzw. einer dachförmigen Sicke (rechtes Diagramm). Die maximale Umformung tritt in der Mitte der Sicke (r = 0) auf, während die Umformung zum Rand der Sicke mit steigendem Radius abnimmt.

Das schematische Diagramm der Fig. 12 verdeutlicht das Umformverhalten von Aluminium und Magnesium beim Einbringen von Sicken bzw. beim Clinchen der Bleche.

Bei der Herstellung von Sicken besitzen Aluminium und Magnesium ein ähnliches Umformverhalten. Aufgrund der höheren Bruchspannung von Aluminium erfolgte der Bruch bei 550 bar, während das Magnesiumblech schon bei 450 bar versagte. Es wurde hierbei ein Blech mit einer Stärke von 1,5 mm verwendet, in das eine Sicke von 20 mm Durchmesser und einem Kantenradius von 2 mm (gekennzeichnet durch die Bemaßung 20 mm R2 Umformkavität, 1,5 mm Blechdicke) verwendet. Ein höherer Umformgrad konnte beim Aluminiumblech erreicht werden.

Beim Clinchen ist die Umformbarkeit von Aluminium etwas besser als von Magnesium. Es genügt schon ein geringer Druck von 100 bar für eine Umformung von ca. 30%. Ein höherer Druck bewirkt nahezu keine Erhöhung der max. Umformung, da das Blech lediglich bis zu einer bestimmten Schlitzgröße umgeformt wird, wonach der Kunststoff in die Umformkavität fließt und einen Gegendruck bildet.

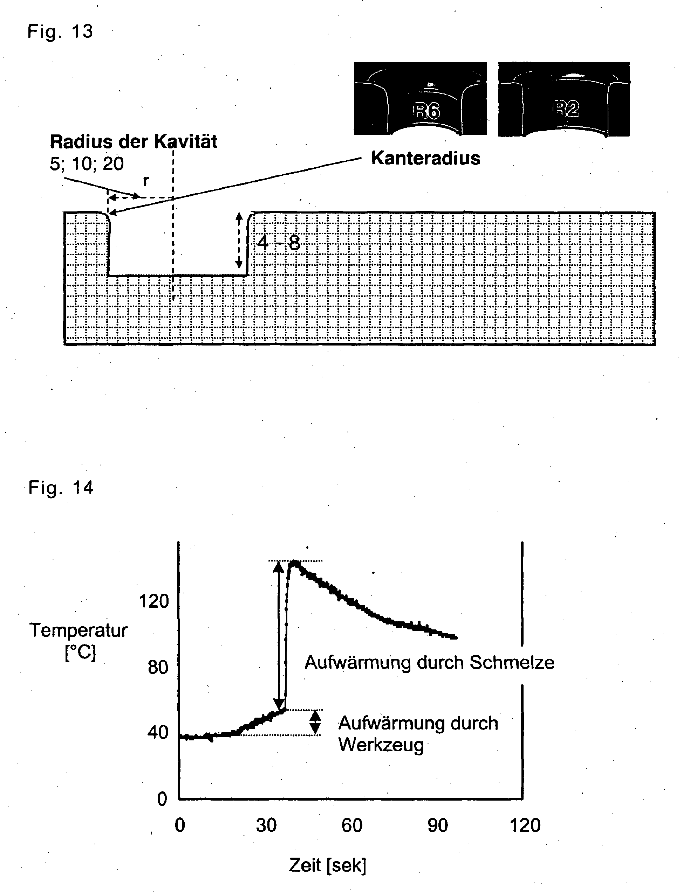

Weitere Einflüsse des Drucks wurden mit anderen Geometrieparametem verbunden, was anhand der Darstellung der Fig. 13 illustriert ist. Die Schnittdarstellung der Fig. 13 verdeutlicht eine Kavität unterschiedlichen Durchmessers (5 mm, 10 mm, 20 mm) und unterschiedlicher Tiefe (4 ... 8 mm), die zudem unterschiedliche Kantenradien aufweisen konnte (2 ... 6 mm). Die Ergebnisse werden im Folgenden diskutiert.

Die Blechcharakterisierung hat gezeigt, dass die Umformung unter erhöhter Temperatur verbessert werden konnte, so dass von der im Spritgießprozess vorhandenen Schmelzetemperatur ein positiver Beitrag für die Umformung erwartet werden kann, was anhand des Diagramms der Fig. 14 verdeutlicht ist.

Hierfür wurden mit einem ähnlichen Werkzeugaufbau Temperaturmessungen an der schmelzeseitigen Magnesiumblechoberfläche durchgeführt. Eine Blechvorwärmung durch Konvektionsflamme wurde versucht. Es zeigte sich jedoch, dass die Wärme des Leichtmetallblechs nach dem Schließen des Werkzeugs schnell abgeführt wird, so dass eine Temperatur von 200 °C nicht erreicht werden konnte. Daher wurde die Blechvorwärmung durch unterschiedlich hohe Werkzeugtemperaturen (40 - 100 °C) realisiert. In diesem Temperaturbereich steigt die absolute Umformung der Sicken sowohl bei Aluminium als auch bei Magnesium um ca. 5%. Die Umformung beim Clinchen von Magnesium steigt nur geringfügig an.

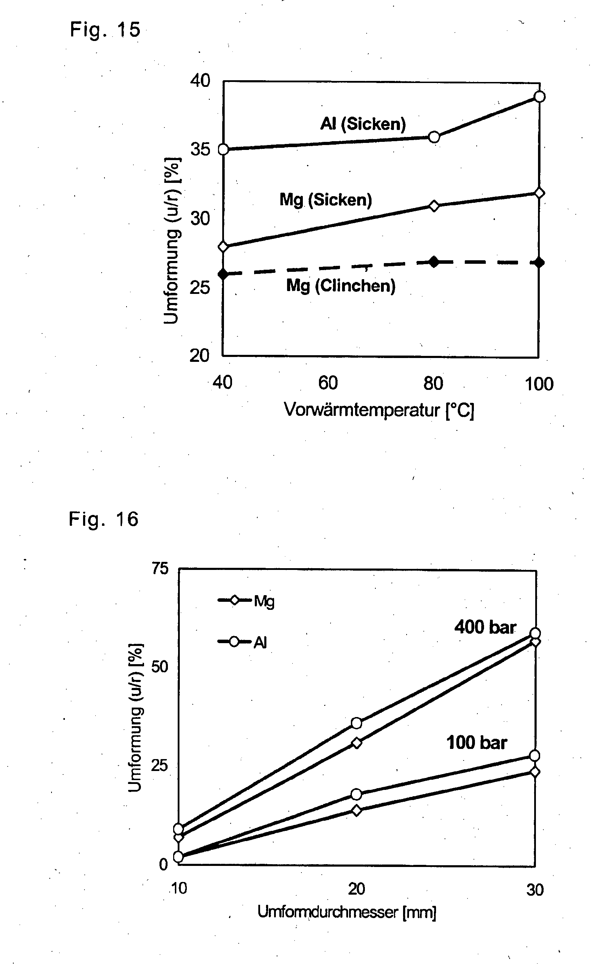

Das schematische Diagramm der Fig. 15 verdeutlicht diesen Zusammenhang, der einen mehr oder weniger starken Einfluss der gewählten Vorwärmtemperatur auf das erzielbare Umformverhältnis (u/r) zeigt.

Die Schmelzetemperatur kann durch eine Aufwärmung des Blechs einen indirekten Einfluss auf dessen Umformbarkeit haben.

Der Einfluss der Umformgeometrie soll im Folgenden diskutiert werden. Wichtig ist zunächst der Durchmesser der Umformkavität. Drei verschiedene Umformkavitäten mit 10, 20 und 30 mm wurden verwendet. Bei der Herstellung von Sicken konnte bei gleichem Druck mit einer größeren Umformkavität eine größere Umformung erreicht werden. Bei Verwendung eines kleinen Durchmessers der Umformkavität konnte der für einen Bruch des Blechs notwendige Druck deutlich erhöht werden. Da tragende Hybridbauteile in der Regel größere Umformzonen als bei den vorliegenden Untersuchungen aufweisen können, sind auch größere Umformungen bei geringeren Drücken erzielbar. Es konnte gezeigt werden, dass die Clinchumformung eine nur geringe Abhängigkeit vom Umformdurchmesser zeigt.

Das Diagramm der Fig. 16 verdeutlicht den Zusammenhang zwischen Umformdurchmesser (0 ... 30 mm) und dem erzielbaren Umformverhältnis (u/r) bei verschiedenen Einspritzdrücken (100 bar, 400 bar), jeweils für Magnesium und Aluminium.

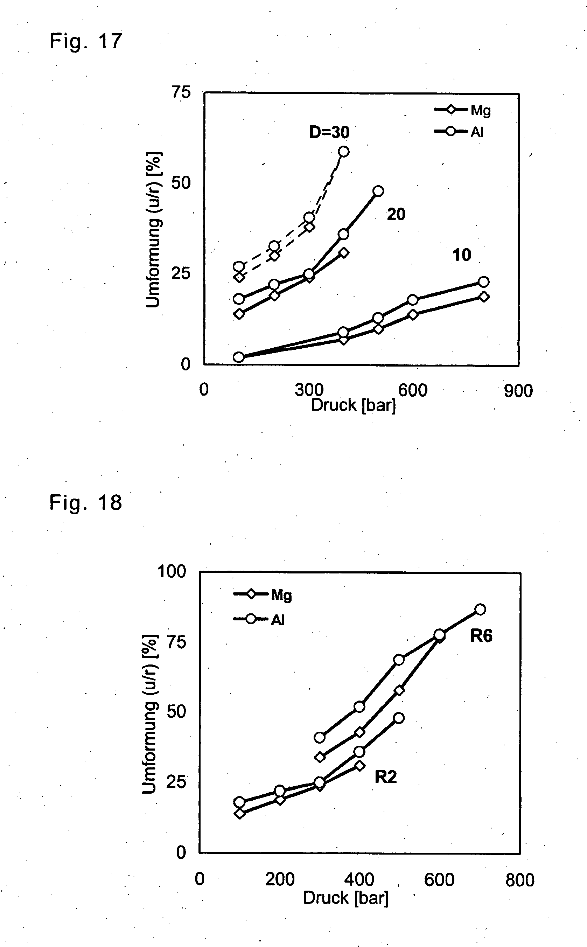

Das Diagramm der Fig. 17 verdeutlicht weiterhin den Zusammenhang von Einspritzdruck (100 ... 800 bar) und erzielbarem Umformverhältnis, jeweils gemessen für verschieden gewählte Umformdurchmesser (D = 10 mm, D = 20 mm, D = 30 mm), jeweils getrennt für Aluminium und Magnesium.

Ein weiterer Parameter wird durch den Kantenradius der Umformkavität gebildet. Während die Standardgeometrie der Versuche ein 20 mm Durchmesser mit R2 Kantenradius war, wurde auch ein größerer Radius von R6 eingesetzt. Hierdurch kann die Spannung in der Umformzone reduziert werden, wodurch ein größerer Druck aufgebracht werden kann, der zu einer größeren Umformung führt. Mit dem Kantenradius von R6 konnte über den gesamten verwendeten Druckbereich eine deutliche Verbesserung der Umformung erzielt werden. Im Vergleich zum Radius R2 wurde beim Aluminiumblech die maximale Umformung (Bruch) von 48% auf 87% und beim Magnesiumblech von 31% auf 77% erhöht. Somit ist eine geeignete Umformgeometrie für die Erzielung einer gewünschten Umformung des Leichtmetallblechs von großer Bedeutung.

Das Diagramm der Fig. 18 verdeutlicht den Zusammenhang zwischen Einspritzdruck, Umformverhältnis und Kantenradius. Es wird dabei erkennbar, dass das erzielbare Umformverhältnis bei gegebenem Einspritzdruck mit größerem Kantenradius ebenfalls zunimmt.

Hinsichtlich der Blechdicke gilt Folgendes: die Standard-Blechdicke war 1,5 mm für Magnesium und Aluminium, wobei letztere auch mit 1 und 2 mm eingesetzt wurden. Alle Blechdicken konnten gut umgeformt werden, der Druckbedarf war jedoch sehr unterschiedlich. Das Umformverhalten von Magnesium- und Aluminiumblech sowie die Verbundfestigkeit der Clinchverbindung werden gemessen und mit dem konventionellen Nietverbund verglichen. Die Geometrie des Clinch-Schlitzes beeinflusst mit dem Umformverhalten auch die Festigkeit der Verbindung.

Bei einem Vergleich unterschiedlicher Schlitzformen zeigte sich, dass die Festigkeit mit Kreuzschlitzung höher als mit nur einem Schlitz ist. Mit einem größeren Kantenradius konnte die Festigkeit verbessert werden. Die höchste mechanische Belastbarkeit konnte mit Clinchverbunden ohne Blechvorarbeit erreicht werden, was die Motivation für eine Prozessintegration unterstreicht. Die absolute Verbundfestigkeit erhöht sich bei Vergrößerung von Schlitzbreite und -länge. Ursächlich hierfür ist die Vergrößerung der Querschnittsfläche. Andererseits ist die Umformung bei geringer Schlitzbreite erhöht. Daher ist ein Optimum zwischen gutem Umformverhalten und der resultierenden Verbundfestigkeit zu finden.

Ein Versuchplan zum lokalen Umformen von Leichmetallblech (Aluminium und Magnesium) wurde durchgeführt. Es wurden Umformverhalten, Geometrie, Clinchverbunde, Belastbarkeit und Prozessführung miteinander verglichen.

Hinsichtlich des Einflusses des Durchmessers der Umformkavität konnte Folgendes festgestellt werden: es hat sich gezeigt, dass die Festigkeit durch Erhöhung des Durchmessers der Umformkavität erhöht werden konnte, obwohl die Schlitzabmaße in allen drei Fällen 10 x 0,5 mm betrugen. Dies liegt daran, dass mit Vergrößerung des Durchmessers eine größere Umformung (ähnlich einer Sicke) stattfindet, die in Prüfrichtung höhere Kräfte aufnehmen kann. Zudem kann angenommen werden, dass mit Erhöhung des Umformdurchmessers auch die Fläche zur Ausbildung eines zusätzlichen Haftverbundes in der Umformkavität ansteigt.

Beim Vergleich mit einem Nietverbund wurden Probekörper mit Nietverbund (Durchmesser 3 mm, Querschnittsfläche 7 mm²) hergestellt, mechanisch geprüft und die Festigkeit mit unterschiedlichen Clinchverbunden (Querschnittsfläche 5...10 mm²) verglichen. Es hat sich gezeigt, dass alle hergestellten Clinchverbunde mechanisch höher belastbar sind als der Nietverbund. Dies kann mit einer Vergrößerung von Verbundquerschnitt und -höhe infolge der Blechumformung und der damit verbundenen vergrößerten Aufnahmefläche der mechanischen Spannungen begründet werden.

Bei der Einbringung von Sicken ist eine Optimierung des Umformverhaltens durch die Gestaltung von Prozessführung und Geometrie möglich. Es konnten Umformgrade von 80% (Magnesium) und 90% (Aluminium) erreicht werden.

Bei Clinchverbindungen ist die Geometrie der im Blech eingearbeiteten Schlitzung von zentraler Bedeutung. Die Machbarkeit der Herstellung von Clinchverbunden ohne Blechvorbearbeitung (Schlitzen) wurde geprüft.

Auf Grund der geringen Verbundhaftung zwischen Kunststoff und Magnesium bzw. Aluminium ist eine Kombination von Sicken und Clinchverbindungen bei der Konstruktion von Hybridbauteilen sinnvoll.

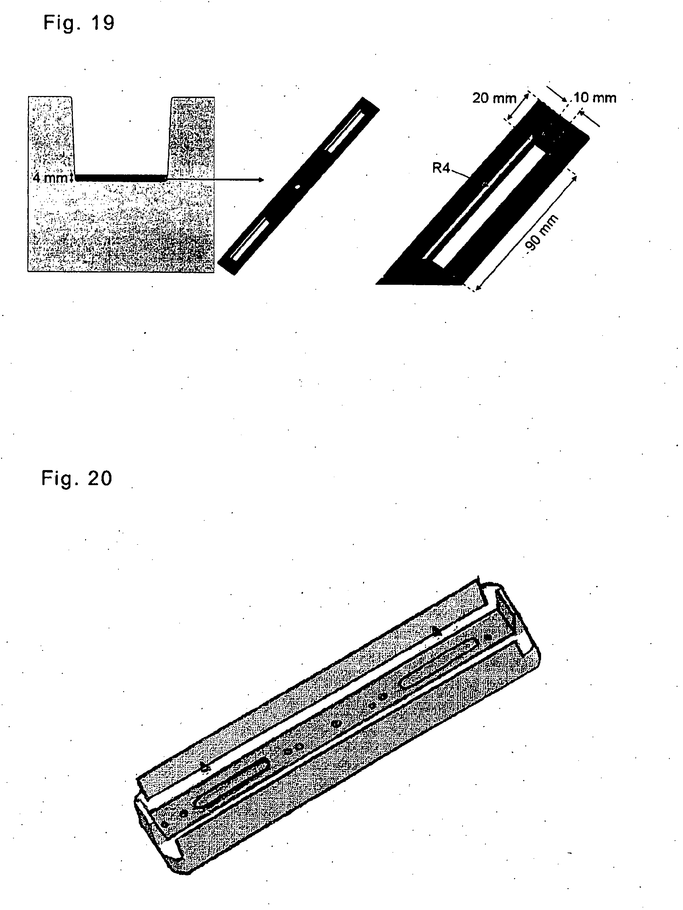

Weitere Möglichkeiten der Bauteilgestaltung am Beispiel eines U-förmigen Trägerbauteils, das in erfindungsgemäßer Verbundbauweise hergestellt ist, sind anhand der Figuren 19 bis 22 verdeutlicht. Dabei, zeigt die Fig. 19 in schematischen Darstellungen den Prozess des Einbringens von Längssicken in ein U-förmiges Trägerbauteil, aus dem ein Hybridbauteil hergestellt wird. Hierbei werden in ein Trägerbauteil durch den Schmelzedruck Längssicken im Bodenbereich eingebracht. Ziel dieser Änderung soll eine verbesserte Widerstandsfähigkeit des Trägers bei Biegebelastungen sein. Die Längssicken können bspw. eine Länge von ca. 90 mm, eine Breite von ca. 10 mm, eine Tiefe von bis zu ca. 4 mm sowie einen Kantenradius von ca. 4 mm aufweisen.

Die schematische Perspektivdarstellung der Fig. 20 zeigt das fertig geformte Trägerbauteil entsprechend Fig. 19, das zusätzlich mit einer Reihe von Clinchverbindungen versehen ist. Die Längssicken sowie die Clinchverbindungen im Bodenbereich des Trägers können bspw. durch einfache, wechselbare Leisten im Grund eines düsenseitigen Formeinsatzes integriert werden. Die Leisten können hierbei vorzugsweise von vorne wechselbar sein. Dabei sollten die Verbindungselemente zum Befestigen der Leisten nicht in Bereichen der später auszuformenden Rippenstruktur liegen, um eine ungewollte Beeinträchtigung der Bauteiloberflächen zu vermeiden.

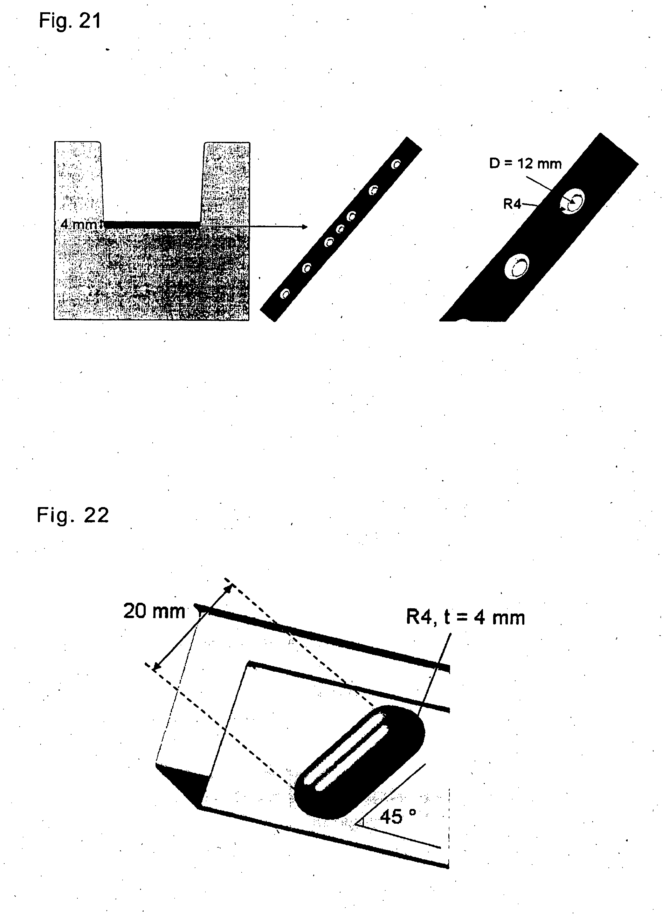

Die schematischen Darstellungen der Fig. 21 zeigen in den Prozess des Einbringens von Clinchverbindungen in ein U-förmiges Trägerbauteil, aus dem ein erfindungsgemäßes Hybridbauteil hergestellt wird. Die Clinchverbindungen können dabei wahlweise miteinander fluchten oder leicht versetzt zueinander angeordnet sein. Die Clinchverbunde können an die Ausführung herkömmlicher Nietverbunde erinnern, um eine Vergleichbarkeit der unterschiedlichen formschlüssigen Verbunde gewährleisten zu können. Die Clinchöffnungen können bspw. jeweils einen Durchmesser von ca. 12 mm, eine Tiefe von bis zu ca. 4 mm sowie einen Kantenradius von ca. 4 mm aufweisen.

Zur Erhöhung der Torsionssteifigkeit können weiterhin an den Flanken eines derartigen Trägerbauteils Diagonalsicken eingeprägt werden. Der perspektivische Teilausschnitt der Fig. 22 verdeutlicht eine Diagonalsicke, die in eine Flanke eines U-förmigen Trägerbauteils entsprechend Fig. 21 eingebracht ist. Um eine derartige Diagonalsicke realisieren zu können, ist ein Rahmen im neuen düsenseitigen Werkzeugeinsatz vorzusehen, der das Entformen der durch die Diagonalsicken entstandenen Hinterschnitte im Bauteil ermöglich soll.

Zusammenfassend kann festgehalten werden, dass in Hybridstrukturen Werkstoffsynergien ausgenutzt werden. Um zu einer optimierten Gestaltung einer Hybridstruktur zu gelangen, sind prozesstechnisch, werkstoffliche und konstruktive Aspekte gleichermaßen zu beachten. Eine gute Abstimmung ermöglicht leichte Strukturbauteile mit guten mechanischen Eigenschaften. Die Gestaltung der form- und/oder stoffschlüssigen Verbindungen zwischen den Komponenten nimmt eine zentrale Stellung ein. In Hybridträgern werden formschlüssige Verbindungen gebildet. Die Gestaltung von Kunststoffrippen soll auf eine lokale und vom Belastungsfall abhängige Verstärkung des Metalleinlegeteils zielen, so dass z.B. bei Biegebelastungen ein Ausknicken der Einlegeteilflanken verhindert werden kann. Im Falle einer Torsionsbelastung wird mit diagonalen Rippen eine Parallelverschiebung der Einlegeteilflanken verhindert.

Die in der vorstehenden Beschreibung, den Zeichnungen und den Ansprüchen offenbarten Merkmale der Erfindung können sowohl einzeln als auch in beliebiger Kombination für die Verwirklichung der Erfindung in ihren verschiedenen Ausgestaltungen von Bedeutung sein. Die Erfindung ist nicht auf die vorstehenden Ausführungsbeispiele beschränkt. Vielmehr ist eine Vielzahl von Varianten und Abwandlungen denkbar, die von dem efindungsgemäßen Gedanken Gebrauch machen und deshalb ebenfalls in den Schutzbereich fallen.

## Patentansprüche

1. Umgeformtes flächiges Halbzeug, umfassend wenigstens eine versteifende Einlage aus Metall oder Kunststoff, die zumindest teilweise formschlüssig in spritzgegossenem Kunststoff eingebettet ist, **dadurch gekennzeichnet, dass** die versteifende Einlage zumindest einen Bereich aufweist, der primär vom Schmelzedruck des im Spritzgießverfahren verarbeiteten Kunststoffes dauerhaft verformt ist.

2. Halbzeug nach Anspruch 1, **dadurch gekennzeichnet, dass** die versteifende Einlage aus Metallblech gebildet ist.

3. Halbzeug nach Anspruch 1, **dadurch gekennzeichnet, dass** die versteifende Einlage aus Kunststoff, insbesondere aus faserverstärktem Kunststoff gebildet ist.

4. Halbzeug nach einem der Ansprüche 1 bis 3, **dadurch gekennzeichnet, dass** der vom Schmelzedruck des spritzgegossenen Kunststoffes verformte Bereich der Einlage plastisch verformt ist.

5. Halbzeug nach einem der voranstehenden Ansprüche, **dadurch gekennzeichnet, dass** der verformte Bereich der Einlage zumindest abschnittsweise durchbrochen ist.

6. Halbzeug nach Anspruch 5, **dadurch gekennzeichnet, dass** der verformte Bereich der Einlage zumindest einen Versagensbruch oder -riss aufweist.

7. Halbzeug nach Anspruch 5 oder 6, **dadurch gekennzeichnet, dass** die Einlage im verformten Bereich wenigstens eine vorgeformte Sicke bzw. einen vorgeformten Durchbruch, insbesondere einen Schlitz oder mehrere Schlitze aufweist.

8. Halbzeug nach Anspruch 7, **dadurch gekennzeichnet, dass** in dem vom Schmelzedruck des spritzgegossenen Kunststoffes verformten Bereich der wenigstens eine Durchbruch bzw. Schlitz aufgeweitet und/oder in zumindest einem Randbereich erweitert ist.

9. Halbzeug nach einem der voranstehenden Ansprüche, **dadurch gekennzeichnet, dass** der vom Schmelzedruck des spritzgegossenen Kunststoffes verformte Bereich der Einlage weitgehend vollständig vom spritzgegossenem Kunststoff umgeben bzw. in diesem eingebettet ist.

10. Halbzeug nach einem der Ansprüche 1 bis 9, **dadurch gekennzeichnet, dass** aus wenigstens zwei unterschiedlichen Materialien, die formschlüssig miteinander verbunden sind, eine Verbundstruktur bzw. ein Hybridbauteil gebildet ist.

11. Verfahren zur Herstellung eines flächigen Halbzeugs bzw. einer Verbundstruktur, das/die wenigstens eine versteifende Einlage aus Metall oder Kunststoff aufweist, die im Spritzgießverfahren zumindest teilweise formschlüssig mit Kunststoff umspritzt wird, **dadurch gekennzeichnet, dass** die versteifende Einlage zumindest in einem Bereich mittels des Schmelzedrucks des im Spritzgießverfahren verarbeiteten Kunststoffes dauerhaft verformt wird.

12. Verfahren nach Anspruch 11, **dadurch gekennzeichnet, dass** der vom Schmelzedruck des spritzgegossenen Kunststoffes verformte Bereich der Einlage plastisch verformt wird.

13. Verfahren nach Anspruch 11 oder 12, **dadurch gekennzeichnet, dass** der verformte Bereich der Einlage vom Schmelzedruck des Kunststoffes zumindest abschnittsweise durchbrochen wird.

14. Verfahren nach Anspruch 13, **dadurch gekennzeichnet, dass** der verformte Bereich der Einlage während des Spritzgießverfahrens zumindest einen Versagensbruch oder -riss erleidet.

15. Verfahren nach Anspruch 13 oder 14, **dadurch gekennzeichnet, dass** die Einlage im zu verformenden Bereich vor dem Spritzgießen mit wenigstens einer vorgeformte Sicke bzw. einem vorgeformten Durchbruch, insbesondere einem Schlitz oder mehreren Schlitzen versehen wird.

16. Verfahren nach Anspruch 15, **dadurch gekennzeichnet, dass** in dem vom Schmelzedruck des spritzgegossenen Kunststoffes verformten Bereich der wenigstens eine Durchbruch bzw. Schlitz aufgeweitet und/oder in zumindest einem Randbereich erweitert wird.

17. Verfahren nach einem der Ansprüche 11 bis 16, **dadurch gekennzeichnet, dass** der vom Schmelzedruck des spritzgegossenen Kunststoffes verformte Bereich der Einlage weitgehend vollständig vom spritzgegossenem Kunststoff umgeben bzw. in diesem eingebettet wird.

18. Verfahren nach einem der Ansprüche 11 bis 17, **dadurch gekennzeichnet, dass** ein als Einlage verwendetes Metallblech vor oder während des Spritzgießens zusätzlich erwärmt wird.

19. Verfahren nach Anspruch 18, **dadurch gekennzeichnet, dass** das Metallblech mittels einer Temperierung des Werkzeugs erwärmt wird.

## Claims

1. Shaped two-dimensional semi-finished product, comprising at least one reinforcing insert made of metal or plastic, which is at least partially embedded positively in injection-moulded plastic, **characterised in that** the reinforcing insert has at least one region which is permanently deformed primarily by the melt pressure of the plastic processed in the injection moulding process.

2. Semi-finished product according to claim 1, **characterised in that** the reinforcing insert is made of sheet metal.

3. Semi-finished product according to claim 1, **characterised in that** the reinforcing insert is made of plastic, in particular of fibre-reinforced plastic.

4. Semi-finished product according to any of claims 1 to 3, **characterised in that** the region of the insert deformed by the melt pressure of the injection-moulded plastic is deformed plastically.

5. Semi-finished product according to any of the preceding claims, **characterised in that** the deformed region of the insert is broken in at least some sections.

6. Semi-finished product according to claim 5, **characterised in that** the deformed region of the insert has at least one failure fracture or crack.

7. Semi-finished product according to claim 5 or 6, **characterised in that** the insert has at least one pre-formed bead or opening, in particular one or more slots, in the deformed region.

8. Semi-finished product according to claim 7, **characterised in that** the at least one opening or slot is expanded and/or widened in at least one edge region in the region deformed by the melt pressure of the injection-moulded plastic.

9. Semi-finished product according to any of the preceding claims, **characterised in that** the region of the insert which is deformed by the melt pressure of the injection-moulded plastic is to a great extent completely surrounded by or embedded in the injection-moulded plastic.

10. Semi-finished product according to any of claims 1 to 9, **characterised in that** a composite structure or a hybrid component is formed from at least two different materials which are positively joined to one another.

11. Method for producing a two-dimensional semi-finished product or a composite structure comprising at least one reinforcing insert made of metal or plastic, which is at least partially embedded positively in plastic in an injection-moulding process, **characterised in that** the reinforcing insert is permanently deformed in at least one region by means of the melt pressure of the plastic processed in the injection moulding process.

12. Method according to claim 11, **characterised in that** the region of the insert which is deformed by the melt pressure of the injection-moulded plastic is deformed plastically.

13. Method according to claim 11 or 12, **characterised in that** the deformed region of the insert is broken in at least some sections by the melt pressure of the plastic.

14. Method according to claim 13, **characterised in that** the deformed region of the insert suffers at least one failure fracture or crack during the injection moulding process.

15. Method according to claim 13 or 14, **characterised in that** the insert is provided with at least one preformed bead or opening, in particular one or more slots, in the region to be deformed before the injection moulding process.

16. Method according to claim 15, **characterised in that** the at least one opening or slot is expanded and/or widened in at least one edge region in the region deformed by the melt pressure of the injection-moulded plastic.

17. Method according to any of claims 11 to 16, **characterised in that** the region of the insert which is deformed by the melt pressure of the injection-moulded plastic is to a great extent completely surrounded by or embedded in the injection-moulded plastic.

18. Method according to any of claims 11 to 17, **characterised in that** a sheet metal used as insert is additionally heated before or during the injection moulding process.

19. Method according to claim 18, **characterised in that** the sheet metal is heated by means of a temperature control of the tool.

## Revendications

1. Produit semi-fini plat déformé comportant au moins une garniture de renforcement en métal ou en matériau synthétique, qui est au moins en partie encastrée par liaison par forme dans une matière synthétique moulée par injection, **caractérisé en ce que** la garniture de renforcement présente au moins une zone, qui est déformée tout d'abord et durablement par la pression de fusion de la matière synthétique traitée selon un procédé de moulage par injection.

2. Produit semi-fini selon la revendication 1, **caractérisé en ce que** la garniture de renforcement est constituée en tôle métallique.

3. Produit semi-fini selon la revendication 1, **caractérisé en ce que** la garniture de renforcement est constituée en matière plastique, en particulier en matière plastique renforcée par des fibres.

4. Produit semi-fini selon l'une quelconque des revendications 1 à 3, **caractérisé en ce que** la zone déformée par pression de fusion de la matière synthétique moulée par injection de la garniture est une déformation plastique.

5. Produit semi-fini selon l'une quelconque des revendications précédentes, **caractérisé en ce que** la zone déformée de la garniture est ajourée au moins par endroits.

6. Produit semi-fini selon la revendication 5, **caractérisé en ce que** la zone déformée de la garniture présente au moins une rupture ou une fissure par cisaillement.

7. Produit semi-fini selon la revendication 5 ou la revendication 6, **caractérisé en ce que** la garniture dans la zone déformée présente au moins une nervure ou une ouverture préformée, en particulier une fente ou plusieurs fentes.

8. Produit semi-fini selon la revendication 7, **caractérisé en ce que** dans la zone déformée par pression de fusion de la matière synthétique moulée par injection l'au moins une ouverture ou fente est évasée et/ou au agrandie dans au moins une zone de bord.

9. Produit semi-fini selon l'une quelconque des revendications précédentes, **caractérisé en ce que** la zone déformée par pression de fusion de la matière synthétique moulée par injection de la garniture est entièrement entourée par une matière synthétique moulée par injection ou est encastrée dans celle-ci.

10. Produit semi-fini selon l'une quelconque des revendications 1 à 9, **caractérisé en ce que** une structure composite ou un composant hybride est formé(e) à partir d'au moins deux matériaux qui sont reliées l'un à l'autre par liaison de forme.

11. Procédé de fabrication d'un produit semi-fini plat ou une structure composite comportant au moins une garniture de renforcement en métal ou en matériau synthétique, qui est injectée selon le procédé de moulage par injection au moins en partie par liaison par forme avec une matière synthétique, **caractérisé en ce que** la garniture de renforcement est déformée durablement au moins dans une zone par la pression de fusion de la matière synthétique traitée selon un procédé de moulage par injection.

12. Produit semi-fini selon la revendication 11, **caractérisé en ce que** la zone déformée par pression de fusion de la matière synthétique moulée par injection de la garniture est déformée plastiquement.

13. Procédé selon la revendication 11 ou 12, **caractérisé en ce que** la zone déformée de la garniture est ajourée par pression de fusion de la matière synthétique au moins par endroits.

14. Produit semi-fini selon la revendication 13, **caractérisé en ce que** la zone déformée de la garniture subit pendant le processus de moulage par pression au moins une rupture ou une fente par cisaillement.

15. Produit semi-fini selon la revendication 13 ou la revendication 14, **caractérisé en ce que** avant le moulage par injection, la garniture dans la zone à déformer par injection est pourvue d'au moins une nervure préformée ou une ouverture préformée, en particulier une fente ou plusieurs fentes.

16. Procédé selon la revendication 15, **caractérisé en ce que** dans la zone déformée par pression de fusion de la matière synthétique moulée par injection l'au moins une ouverture ou fente est évasée et/ou au agrandie dans au moins une zone de bord.

17. Procédé selon l'une quelconque des revendications 11 à 16, **caractérisé en ce que** la zone déformée par pression de fusion de la matière synthétique moulée par injection de la garniture est entièrement entourée par une matière synthétique moulée par injection ou est encastrée dans celle-ci.

18. Procédé selon l'une quelconque des revendications 11 à 17, **caractérisé en ce qu'**une tôle métallique utilisée en tant que garniture est en outre chauffée avant ou pendant le moulage par injection.

19. Procédé selon la revendication 18, **caractérisé en ce que** la tôle métallique est chauffée au moyen d'un équilibrage de la température de l'outil.
